(19) Europäisches Patentamt / European Patent Office / Office européen des brevets

(11) **EP 3 978 441 A1**

(12) **EUROPEAN PATENT APPLICATION**

(43) Date of publication:
06.04.2022 Bulletin 2022/14

(21) Application number: 21164159.2

(22) Date of filing: 23.03.2021

(51) International Patent Classification (IPC):
$C01G\ 49/00$ (2006.01)  $H01M\ 4/1397$ (2010.01)
$H01M\ 4/36$ (2006.01)  $H01M\ 4/58$ (2010.01)
$H01M\ 4/62$ (2006.01)  $H01M\ 4/02$ (2006.01)
$H01M\ 10/0525$ (2010.01)

(52) Cooperative Patent Classification (CPC):
H01M 4/1397; C01B 25/45; H01M 4/364;
H01M 4/366; H01M 4/5825; H01M 4/62;
H01M 10/0525; H01M 2004/028; Y02E 60/10

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2020 JP 2020165088**

(71) Applicant: **Sumitomo Osaka Cement Co., Ltd.
Tokyo 102-8465 (JP)**

(72) Inventors:
• **NOZOE, Tsutomu**
  **TOKYO, 102-8465 (JP)**
• **NAKANO, Toyomasa**
  **TOKYO, 102-8465 (JP)**

(74) Representative: **Cabinet Laurent & Charras
Le Contemporain
50 Chemin de la Bruyère
69574 Dardilly Cedex (FR)**

(54) **POSITIVE ELECTRODE MATERIAL FOR LITHIUM ION SECONDARY BATTERIES, POSITIVE ELECTRODE FOR LITHIUM ION SECONDARY BATTERIES, AND LITHIUM ION SECONDARY BATTERY**

(57) A positive electrode material for lithium ion secondary batteries is provided, wherein a ratio (A/B) of an oil absorption amount (A) of powder per unit mass of the material, which is measured using N-methyl-2-pyrrolidone, to a void volume (B) of powder per unit mass of the material is 0.30 or more and 0.85 or less, and a ratio (C/D) of a powder density (C) of the material, which is measured in a powder pressure test at a pressure of 4.5 MPa, to an initial powder density (D) of the material is 1.3 or more and 1.7 or less.

**Description**

CROSS-REFERENCE TO RELATED APPLICATIONS

This application claims the benefit of Japanese Patent Application No. 2020-165088 filed September 30, 2020, the disclosure of which is herein incorporated by reference in its entirety.

BACKGROUND OF THE INVENTION

Field of the Invention

The present invention relates to a positive electrode material for lithium ion secondary batteries, a positive electrode for lithium ion secondary batteries, and a lithium ion secondary battery.

Description of Related Art

While the development of a technique of mounting secondary batteries on an electric vehicle (xEV) has progressed, improvement of energy density per unit volume and improvement of high output characteristics have been required for the secondary batteries . In order to improve these characteristics, a positive electrode active material for lithium ion secondary batteries having excellent coating properties for a target such as an electrode current collector is required.

A positive electrode active material for lithium ion secondary batteries in which an oil absorption amount with respect to N-methylpyrrolidone measured using a method according to JIS K5101-13-1 is 30 mL or more and 50 mL or less per 100 g of powder is known to have excellent coating properties and high battery characteristics (for example, refer to Japanese Patent No. 4584351) .

A positive electrode material for lithium ion secondary batteries in which a compressive strength per unit particle diameter is 1.0 MPa/$\mu$m or more and 10.0 MPa/$\mu$m or less and an oil absorption amount measured using N-methyl-2-pyrrolidone is 60 ml/100 g or less is known to have excellent charge and discharge characteristics (for example, refer to Japanese Patent No. 6501014) .

An electrode material that is a mixture including a partially-crushed granulated body and in which an affinity value to N-methyl-2-pyrrolidinone measured by pulse NMR is 5000 or more and 20000 or less is known to suppress deterioration in rate characteristics during charge and discharge even after performing a crushing process (for example, Japanese Patent No. 6231966) .

SUMMARY OF THE INVENTION

In the related art, in order to improve energy density or high output characteristics in an electrode for lithium ion secondary batteries, there is a problem in that the electrode density is not sufficiently high.

The present invention has been made in consideration of the above-described circumstances, and an object thereof is to provide a positive electrode material for lithium ion secondary batteries that can realize a sufficient electrode density for improving energy density or high output characteristics, a positive electrode for lithium ion secondary batteries including the positive electrode material for lithium ion secondary batteries, and a lithium ion secondary battery including the positive electrode for lithium ion secondary batteries.

The present inventors conducted a thorough investigation in order to achieve the object and found that wettability of powder is improved by manufacturing a granulated body of an olivine positive electrode material and adjusting a crushed state of the granulated body. It was found that, since a ratio between an oil absorption amount per unit mass and a void volume per unit mass correlates to wettability of powder, by adjusting this ratio to be in a predetermined range, the wettability of a powder surface can be improved, an electrode paste can be uniformly prepared with high concentration, the density during pressing can be easily improved, and thus the electrode density can be improved as compared to existing olivine positive electrode materials. Based on this finding, the present invention is completed.

In order to achieve the obj ect, according to the first aspect of the present invention, there is provided a positive electrode material for lithium ion secondary batteries, in which a ratio (A/B) of an oil absorption amount (A) of powder per unit mass of the material, which is measured using N-methyl-2-pyrrolidone, to a void volume (B) of powder per unit mass is 0.30 or more and 0.85 or less, and a ratio (C/D) of a powder density (C) of the material, which is measured in a powder pressure test at a pressure of 4.5 MPa, to an initial powder density (D) of the material is 1.3 or more and 1.7 or less.

According to the second aspect of the present invention, there is provided a positive electrode for lithium ion secondary batteries, the positive electrode including: an electrode current collector; and a positive electrode mixture layer that is formed on the electrode current collector, in which the positive electrode mixture layer includes the positive electrode material for lithium ion secondary batteries according to the first aspect of the present invention.

According to the third aspect of the present invention, there is provided a lithium ion secondary battery including: a positive electrode; a negative electrode; and a non-aqueous electrolyte, in which the positive electrode for lithium ion secondary batteries according to the aspect of the present invention is provided as the positive electrode.

With the positive electrode material for lithium ion secondary batteries according to the present invention, a positive electrode material for lithium ion secondary batteries that can realize a sufficient electrode density for improving energy density or high output characteristics can be provided.

With the positive electrode for lithium ion secondary batteries according to the present invention, a sufficient electrode density for improving energy density or high output characteristics can be realized.

With the lithium ion secondary battery according to the present invention, energy density or high output characteristics can be improved.

BRIEF DESCRIPTION OF THE DRAWINGS

FIG. 1 is a scanning electron micrograph showing agglomerates.
FIG. 2 is a scanning electron micrograph showing crushed particles.

DETAILED DESCRIPTION OF THE INVENTION

Suitable examples of an embodiment of a positive electrode material for lithium ion secondary batteries, a positive electrode for lithium ion secondary batteries, and a lithium ion secondary battery according to the present invention will be described below.

The embodiment will be described in detail for easy understanding of the concept of the present invention, but the present invention is not limited thereto unless specified otherwise. For example, materials, ratios, values, amounts, positions, kinds, numbers, and the like may be changed, added, or omitted as necessary.

Positive Electrode Material for Lithium Ion Secondary Batteries

In the positive electrode material for lithium ion secondary batteries according to the embodiment, a ratio (A/B) of an oil absorption amount (A) with respect to powder per unit mass measured using N-methyl-2-pyrrolidone to a void volume (B) of powder per unit mass is 0.30 or more and 0.85 or less, and in a powder pressure test, a ratio (C/D) of a powder density (C) measured at a pressure of 4.5 MPa to an initial powder density (D) is 1.3 or more and 1.7 or less.

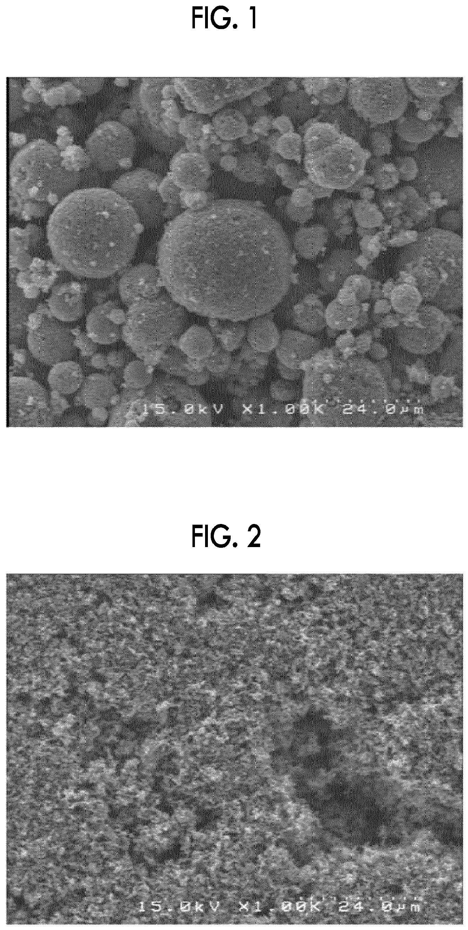

In addition, the positive electrode material for lithium ion secondary batteries according to the embodiment is prepared using a method of producing the positive electrode material for lithium ion secondary batteries described below and is preferably a mixture including a mixture including carbon-coated primary particles, a granulated body, and a partially-crushed granulated body, the carbon-coated primary particle being obtained by forming a carbonaceous film on surfaces of primary particles of a positive electrode active material, the granulated body being obtained by agglomeration of a plurality of carbon-coated primary particles, and the partially-crushed granulated body being obtained by crushing a part of the granulated body. In the positive electrode material for lithium ion secondary batteries according to the embodiment, the granulated body has a particle shape in which secondary particles can be distinguished from each other when observed with a scanning electron microscope (SEM) at 1000-fold as shown in FIG. 1. On the other hand, the partially-crushed granulated body has a particle shape in which particles cannot be distinguished from each other when observed with a scanning electron microscope (SEM) at 1000-fold as shown in FIG. 2.

In the positive electrode material for lithium ion secondary batteries according to the embodiment, the above-described ratio (A/B) is 0.30 or more and 0.85 or less, preferably 0.40 or more and 0.80 or less, more preferably 0.45 or more and 0.75 or less, and still more preferably 0.50 or more and 0.70 or less. When the ratio (A/B) is less than the lower limit value, small voids are likely to be formed during paste preparation, and the electrode density decreases. When the ratio (A/B) is more than the upper limit value, the amount of a solvent required for preparing a paste increases, and it is difficult to prepare a paste with a high concentration.

In the positive electrode material for lithium ion secondary batteries according to the embodiment, the oil absorption amount (A) with respect to powder per unit mass measured using N-methyl-2-pyrrolidone (NMP) is preferably 50 mL/100 g or less, more preferably 45 mL/100 g or less, and still more preferably 40 mL/100 g or less. The oil absorption amount (A) may be 38 mL/100 g or less. In a case where the oil absorption amount (A) is the aforementioned upper limit value or less, when a positive electrode material, a conductive auxiliary agent, a binder resin (binder), and a solvent are mixed with each other to prepare a positive electrode material paste for lithium ion secondary batteries, the binder or the solvent is not likely to permeate into the granulated body, an increase in paste viscosity is suppressed, and coating properties on an aluminum current collector can be improved. In addition, the required amount of the binder can be obtained, and binding properties between the positive electrode mixture layer and the aluminum current collector can be improved. The lower limit of the oil absorption amount (A) can be optionally selected. For example, the oil absorption amount (A) may be 5 mL/100 g or more, 10 mL/100 g or more, 15 mL/100 g or more, or 20 mL/100 g or more.

The oil absorption amount (A) is measured with a method according to JIS K5101-13-1 (refined linseed oil method) by using linseed oil instead of N-methyl-2-pyrrolidone.

The reason why the oil absorption amount (A) with respect to the positive electrode material for lithium ion secondary batteries is measured using N-methyl-2-pyrrolidone is that N-methyl-2-pyrrolidone is generally used as a dispersion solvent of the conductive auxiliary agent and the binder during paste preparation.

In the positive electrode material for lithium ion secondary batteries according to the embodiment, the void volume (B) of powder per unit mass (per 1 g) can be optionally selected, and is preferably $0.40 \text{ cm}^3$ or more and $0.60 \text{ cm}^3$ or less, more preferably $0.45 \text{ cm}^3$ or more and $0.58 \text{ cm}^3$ or less, still more preferably $0.48 \text{ cm}^3$ or more and $0.56 \text{ cm}^3$ or less, and especially preferably $0.50 \text{ cm}^3$ or more and $0.55 \text{ cm}^3$ or less. The void volume (B) may be $0.50 \text{ cm}^3$ or more and $0.54 \text{ cm}^3$ or less. When the void volume (B) is the lower limit value or more, gaps where the conductive auxiliary agent or the binder enters are generated, and the conductivity of the positive electrode material or the binding properties with the current collector can be easily secured. When the void volume (B) is the upper limit value or less, the density of the positive electrode material of the paste can be easily improved, and the electrode density is improved.

The void volume (B) can be measured using a method described in Example.

That is, the void volume (B) can be calculated from the following Expression (5).

$$\text{(Void Volume per Unit Mass of Positive Electrode Material)}$$
$$= \text{(Volume per Unit Mass of Positive Electrode Material which}$$
$$\text{is calculated from Initial Powder Density)} - \text{(Volume per Unit}$$
$$\text{Mass of Positive Electrode Material which is calculated from}$$
$$\text{True Density of Positive Electrode Material)} \quad \dots \quad (5)$$

In the positive electrode material for lithium ion secondary batteries according to the embodiment, in the powder pressure test, the ratio (C/D) of the powder density (C) measured at a pressure of 4.5 MPa to the initial powder density (D) is 1.30 or more and 1.70 or less, preferably 1.35 or more and 1.65 or less, more preferably 1.38 or more and 1.62 or less, and still more preferably 1.40 or more and 1.60 or less. When the ratio (C/D) is less than the lower limit value, the density during roll press is not likely to increase, and it is difficult to prepare a high-density positive electrode. When the ratio (C/D) is more than the upper limit value, the initial powder has a shall-like structure, voids are formed during electrode preparation, and the density decreases. The initial powder density (D) can be optionally selected, and for example, it may be in a range of 1.10 to 1.30 $\text{g/cm}^3$. The powder density (C) can be optionally selected, and for example, it may be in a range of 1.40 to 2.00 $\text{g/cm}^3$.

The powder density (C) and the powder density (D) can be measured using a method described in Examples.

That is, the powder density (C) and the powder density (D) can be obtained by the powder pressure test shown below.

The density of the powder (positive electrode material) which is provided in the container can be calculated from the formula: (Mass of Powder) / (Thickness of Powder $\times$ Surface Area of Powder). First, 3 g of positive electrode material is put into a cylindrical container having a diameter of 2 cm, and a pressure is applied from above at a rate of 0.01 mm for 10 seconds to perform a powder pressure test. During the powder pressure test, the thickness of the powder and the applied pressure are detected using a micrometer and a pressure sensor respectively. The density of the powder measured immediately before the pressure increases is detected as an initial powder density. The density of the powder measured when the detected pressure reached 4.5 MPa after pressing is detected as a powder density measured at a pressure of 4.5 MPa.

The positive electrode material for lithium ion secondary batteries according to the embodiment is preferably a mixture including carbon-coated primary particles in which a carbonaceous film having a thickness of 0.5 nm or more and 10 nm or less has been formed on surfaces of primary particles of a positive electrode active material, a granulated body in which a plurality of the carbon-coated primary particles have been agglomerated, and the partially-crushed granulated body which is generated by crushing a part of the granulated body.

The partially-crushed granulated body is obtained by crushing at least a part of the granulated body.

Here, "crushing at least a part of the granulated body" represents crushing at least a part of the granulated body, and it is not necessary to crush the entire granulated body.

In the positive electrode material for lithium ion secondary batteries according to the embodiment, a particle diameter (D90) corresponding to a cumulative percentage of 90% in a cumulative particle diameter distribution of the mixture is preferably 5 μm or less, more preferably 4 μm or less, and still more preferably 3 μm or less. The lower limit of the particle diameter (D90) may be 0.5 μm or more, may be 1.0 μm or more, and may be 1.2 μm or more. When the particle diameter (D90) is the upper limit value or less, the density of the coating film during electrode preparation is likely to increase.

The particle diameter (D90) of the mixture refers to the average particle diameter of the mixture when the cumulative percentage in a cumulative particle diameter distribution of scattering intensity distribution obtained using a dynamic light scattering method is 90%. The particle diameter (D90) of the mixture can be measured using a laser diffraction particle diameter distribution analyzer (for example, manufactured by Horiba Ltd., trade name: LA-950 V2). With the particle diameter distribution analyzer, the particle diameter (D90) of the mixture can be measured using a quartz cell having an optical path length of 10 mm × 10 mm in a dispersion liquid having a solid content of 5% by mass adjusted with an alcohol compound.

In the positive electrode material for lithium ion secondary batteries according to the embodiment, a particle diameter (D10) corresponding to a cumulative percentage of 10% in a cumulative particle diameter distribution of the mixture is preferably 100 nm or more and 1000 nm or less, more preferably 150 nm or more and 800 nm or less, and still more preferably 200 nm or more and 600 nm or less. When the particle diameter (D10) is less than the lower limit value, fragments of the positive electrode active material or carbon formed by crushing are incorporated, and battery characteristics deteriorate. When the particle diameter (D10) is more than the upper limit value, the crushing strength is insufficient or primary particles are coarse, which causes a decrease in density or deterioration in battery characteristics.

The particle diameter (D10) of the mixture can be measured using the same method as that of the particle diameter (D90) of the mixture.

In the positive electrode material for lithium ion secondary batteries according to the embodiment, the average particle diameter of the mixture is preferably 0.4 μm or more and 4.0 μm or less, more preferably 0.6 μm or more and 2.0 μm or less, and still more preferably 0.8 μm or more and 1.0 μm or less. When the average particle diameter of the mixture is the lower limit value or more, the mixture is sufficiently large with respect to the conductive auxiliary agent or the binder such that the density thereof in the current collector is improved. When the average particle diameter of the mixture is the upper limit value or less, the particle diameter is suitable for the thickness of the coating film, and a uniformly dispersed film can be prepared.

The average particle diameter of the mixture refers to the average particle diameter (particle diameter (D50) of the mixture when the cumulative percentage in a cumulative particle diameter distribution of scattering intensity distribution obtained using a dynamic light scattering method is 50%. The average particle diameter (the particle diameter (D50)) of the mixture can be measured using the same method as that of the particle diameter (D90) of the mixture.

In the positive electrode material for lithium ion secondary batteries according to the embodiment, a specific surface area of the mixture is preferably 3 $m^2$/g or more and 20 $m^2$/g or less, more preferably 5 $m^2$/g or more and 16 $m^2$/g or less, and still more preferably 7 $m^2$/g or more and 12 $m^2$/g or less. When the specific surface area of the mixture is the lower limit value or more, the primary particle diameter is sufficiently small and is suitable for charge and discharge, and binding between particles is insufficient. When the specific surface area of the mixture is the upper limit value or less, an increase in specific surface area caused by the peeling of carbon is small, and battery characteristics are excellent.

In the positive electrode material for lithium ion secondary batteries according to the embodiment, the specific surface area of the mixture is measured using a specific surface area meter with a BET method using nitrogen ($N_2$) adsorption.

In the positive electrode material for lithium ion secondary batteries according to the embodiment, the thickness of the carbonaceous film formed on the surfaces of the primary particles of the positive electrode active material is preferably 0.5 nm or more and 10 nm or less, more preferably 0.8 nm or more and 8 nm or less, and still preferably 1 nm or more and 5 nm or less. When the thickness of the carbonaceous film is the lower limit value or more, the electron conductivity of the active material surface can be secured. When the thickness of the carbonaceous film is the upper limit value or less, intercalation and deintercalation of lithium ions is not likely to be inhibited.

The thickness of the carbonaceous film with which the surfaces of the primary particles of the positive electrode active material are coated is measured, for example, using a transmission electron microscope (TEM) or an energy dispersive X-ray microanalyzer (EDX).

In the positive electrode material for lithium ion secondary batteries according to the embodiment, the average particle diameter of the carbon-coated primary particles obtained by forming the carbonaceous film having a thickness of 0.5 nm or more and 10 nm or less on the surfaces of the primary particles of the positive electrode active material is preferably 50 nm or more and 900 nm or less, more preferably 80 nm or more and 500 nm or less, and still preferably 100 nm or more and 200 nm or less. When the average particle diameter of the carbon-coated primary particles is the lower limit value or more, the utilization rate as the active material of the particles is improved, and the energy density is improved. When the average particle diameter of the carbon-coated primary particles is the upper limit value or more, a volume change is not likely to occur during charge and discharge, and cycle characteristics are improved.

The average particle diameter of the carbon-coated primary particle can be calculated by directly observing the particles using a scanning electron microscope, calculating the average of a major axis and a minor axis of each of the particles as a particle diameter, and calculating the average of the particle diameters of 500 particles.

The carbon content in the carbon-coated primary particles is measured using a carbon analyzer (carbon-sulfur analyzer: EMIA-810W (trade name), manufactured by Horiba Ltd.).

In the positive electrode material for lithium ion secondary batteries according to the embodiment, a coating ratio of the carbonaceous film in the carbon-coated primary particles is preferably 80% or more, more preferably 90% or more, and still more preferably 95% or more. When the coating ratio of the carbonaceous film in the carbon-coated primary particles is the lower limit value or more, the coating effect of the carbonaceous film can be sufficiently obtained.

The coating ratio of the carbonaceous film in the carbon-coated primary particles is measured, for example, using a transmission electron microscope (TEM) or an energy dispersive X-ray microanalyzer (EDX).

In the positive electrode material for lithium ion secondary batteries according to the embodiment, the average particle diameter of the granulated body is preferably 1 $\mu$m or more and 50 $\mu$m or less, more preferably 2 $\mu$m or more and 30 $\mu$m or less, and still more preferably 3 $\mu$m or more and 15 $\mu$m or less. When the average particle diameter of the granulated body is the lower limit value or more, energy required for crushing decreases, and the particles are likely to be crushed. When the average particle diameter of the granulated body is the upper limit value or less, the partially-crushed granulated body having a huge fragment shape is not likely to remain during crushing. The average particle diameter of the granulated body can be measured using the powder before crushing.

The average particle diameter of the granulated body refers to the average particle diameter (particle diameter (D50) of the granulated body when the cumulative percentage in a cumulative particle diameter distribution of scattering intensity distribution obtained using a dynamic light scattering method is 50%. The average particle diameter (the particle diameter (D50)) of the granulated body can be measured using the same method as that of the particle diameter (D90) of the mixture.

In the positive electrode material for lithium ion secondary batteries according to the embodiment, a specific surface area of the granulated body is preferably 3 m$^2$/g or more and 20 m$^2$/g or less, more preferably 5 m$^2$/g or more and 16 m$^2$/g or less, and still more preferably 7 m$^2$/g or more and 12 m$^2$/g or less. When the specific surface area of the granulated body is the lower limit value or more, the primary particle diameter is sufficiently small and is suitable for charge and discharge, and binding between particles is insufficient. When the specific surface area of the granulated body is the upper limit value or less, an increase in specific surface area caused by the peeling of the carbonaceous film is small, and battery characteristics are excellent.

The specific surface area of the granulated body can be measured with the same method as that of the specific surface area of the mixture using the powder before crushing.

Positive Electrode Active Material

It is preferable that the positive electrode active material include an olivine positive electrode active material.

The olivine positive electrode active material is formed of a compound represented by Formula Li$_x$A$_y$D$_z$PO$_4$ (where A represents at least one selected from the group consisting of Co, Mn, Ni, Fe, Cu, and Cr, D represents at least one selected from the group consisting of Mg, Ca, Sr, Ba, Ti, Zn, B, Al, Ga, In, Si, Ge, Sc, and Y, 0.9 < x < 1.1, 0 < y ≤ 1, 0 ≤ z < 1, and 0.9 < y + z < 1.1).

From the viewpoints of high discharge capacity and high energy density, it is preferable that the positive electrode active material satisfies 0.9 < x < 1.1, 0 < y ≤ 1, 0 ≤ z < 1, and 0.9 < y + z < 1.1 in Li$_x$A$_y$D$_z$PO$_4$.

From the viewpoint of obtaining the positive electrode mixture layer that can realize high discharge potential and high safety, Co, Mn, Ni, or Fe is preferable as A, and Mg, Ca, Sr, Ba, Ti, Zn, or Al is preferable as D.

The crystallite diameter of the olivine positive electrode active material is preferably 30 nm or more and 300 nm or less and more preferably 50 nm or more and 250 nm or less. When the crystallite diameter of the olivine positive electrode active material is less than 30 nm, a large amount of carbon is required to sufficiently coat the surface of the positive electrode active material with the pyrolytic carbonaceous film. In addition, since a large amount of the binder is required, the amount of the positive electrode active material in the positive electrode decreases, and the battery capacity may decrease. Likewise, the carbonaceous film may peel off due to an insufficient binding strength. On the other hand, when the crystallite diameter of the olivine positive electrode active material is more than 300 nm, the internal resistance of the positive electrode active material excessively increases, and thus when a battery is formed, the discharge capacity at a high charge-discharge rate may decrease. In addition, when charge and discharge is repeated, an intermediate phase is likely to be formed, and a constituent element is eluted from the intermediate phase. As a result, the capacity decreases.

As a method of calculating the crystallite diameter of the olivine positive electrode active material, the crystallite diameter can be determined by analyzing a powder X-ray diffraction pattern obtained by X-ray diffraction measurement using a Williamson-Hall method.

Carbonaceous Film

The carbonaceous film is a pyrolytic carbonaceous film that is obtained by carbonizing an organic compound as a raw material. It is preferable that the carbon source that is a raw material of the carbonaceous film is derived from an organic compound in which the purity of carbon is 40.00% or higher and 60.00% or lower.

In the positive electrode material for lithium ion secondary batteries according to the embodiment, as a method of calculating "purity of carbon" in the carbon source that is a raw material of the carbonaceous film, when plural kinds of organic compounds are used, a method of calculating and adding the amounts of carbon (% by mass) in the mixing amounts of the respective organic compounds based on the mixing amounts (% by mass) of the respective organic compounds and the known purities (%) of carbon and calculating the "purity of carbon" in the carbon source from the following Formula (1) based on the total mixing amount (% by mass) and the total amount of carbon (% by mass) of the organic compounds is used.

$$\text{Purity of Carbon (\%)} = \text{Total amount of Carbon (\% by mass)}$$
$$/ \text{ Total Mixing Amount (\% by mass)} \times 100 \quad \ldots \quad (1)$$

The positive electrode material for lithium ion secondary batteries according to the embodiment may include a component other than the above-described mixture. Examples of the component other than the mixture include a binder formed of a binder resin and a conductive auxiliary agent such as carbon black, acetylene black, graphite, Ketjenblack, natural graphite, or artificial graphite.

In the positive electrode material for lithium ion secondary batteries according to the embodiment, a ratio (A/B) of an oil absorption amount (A) with respect to powder per unit mass measured using N-methyl-2-pyrrolidone to a void volume (B) of powder per unit mass is 0.30 or more and 0.85 or less, and in a powder pressure test, a ratio (C/D) of a powder density (C) measured at a pressure of 4.5 MPa to an initial powder density (D) is 1.3 or more and 1.7 or less. Therefore, wettability of a powder surface is improved, an electrode paste can be uniformly prepared with high concentration, the density during pressing can be easily improved, and thus the electrode density can be improved as compared to existing olivine positive electrode materials. Accordingly, a positive electrode material for lithium ion secondary batteries that can realize a sufficient electrode density for improving energy density or high output characteristics can be provided.

Method of Producing Positive Electrode Material for Lithium Ion Secondary Batteries

A method of producing the positive electrode material for lithium ion secondary batteries according to the embodiment is not particularly limited, and examples thereof include a method including: a step A of producing a positive electrode active material represented by Formula $Li_xA_yD_zPO_4$ and a positive electrode active material precursor; a step B of mixing at least one positive electrode active material particle raw material selected from the group consisting of the positive electrode active material and the positive electrode active material precursor, an organic compound, and water with each other to prepare a slurry; a step C of drying the slurry and calcinating the obtained dry material in a non-oxidative atmosphere of 500°C or higher and 1000°C or lower; and a step D of crushing at least a part of a granulated body with a crusher, the granulated body being obtained by agglomeration of a plurality of primary particles obtained in the step C.

Step A

$Li_xA_yD_zPO_4$ is not particularly limited.

In the step A, for example, the positive electrode active material represented by Formula $Li_xA_yD_zPO_4$ and the positive electrode active material precursor can be obtained with a method including: introducing a Li source, an A source, a D source, and a $PO_4$ source into water such that a molar ratio x:y+z thereof is 1:1; stirring the components to obtain a $Li_xA_yD_zPO_4$ precursor solution; stirring and mixing the precursor solution at 15°C or higher 70°C or lower for 1 hour or longer and 20 hours or shorter to prepare a hydration precursor solution; putting this hydration precursor solution into a pressure resistant vessel; and performing a hydrothermal treatment at a high temperature and a high pressure, for example, at 130°C or higher and 190°C or lower and 0.2 MPa or higher for 1 hour or longer and 20 hours or shorter.

In this case, by adjusting the temperature and the time during the stirring of the hydration precursor solution and the temperature, the pressure, and the time during the hydrothermal treatment, the particle diameter of the $Li_xA_yD_zPO_4$ particles can be controlled to be a desired diameter.

In this case, as the Li source, for example, at least one selected from the group consisting of a lithium inorganic acid salt such as lithiumhydroxide (LiOH), lithium carbonate ($Li_2CO_3$), lithium chloride (LiCl), or lithium phosphate ($Li_3PO_4$) and a lithium organic acid salt such as lithium acetate ($LiCH_3COO$) or lithium oxalate (($COOLi$)$_2$) is suitably used.

Among these, lithium chloride or lithium acetate is preferable from the viewpoint of obtaining a uniform solution phase.

As the A source, at least one selected from the group consisting of a Co source formed of a cobalt compound, a Mn source formed of a manganese compound, a Ni source formed of a nickel compound, a Fe source formed of an iron compound, a Cu source formed of a copper compound, and a Cr source formed of a chromium compound is preferable.

In addition, as the D source, at least one selected from the group consisting of a Mg source formed of a magnesium compound, a Ca source formed of a calcium compound, a Sr source formed of a strontium compound, a Ba source formed of a barium compound, a Ti source formed of a titanium compound, a Zn source formed of a zinc compound, a B source formed of a boron compound, an Al source formed of an aluminum compound, a Ga source formed of a gallium compound, an In source formed of an indium compound, a Si source formed of a silicon compound, a Ge source formed of a germanium compound, a Sc source formed of a scandium compound, and a Y source formed of a yttrium compound is preferable.

As the $PO_4$ source, for example, at least one selected from the group consisting of phosphoric acids such as orthophosphoric acid ($H_3PO_4$) or metaphosphoric acid ($HPO_3$), ammonium dihydrogen phosphate ($NH_4H_2PO_4$) , diammonium hydrogen phosphate (($NH_4$)$_2HPO_4$), ammonium phosphate (($NH_4$)$_3PO_4$), lithium phosphate ($Li_3PO_4$), dilithium hydrogen phosphate ($Li_2HPO_4$), lithium dihydrogen phosphate ($LiH_2PO_4$), and hydrates thereof is preferable.

In particular, orthophosphoric acid is preferable from the viewpoint of easily forming a uniform solution phase.

Step B

The organic compound used in the step B is not particularly limited as long as it is a compound with which the carbonaceous film can be formed on the surface of the positive electrode active material. Examples of the organic compound include polyvinyl alcohol (PVA), polyvinylpyrrolidone, cellulose, starch, gelatin, carboxymethyl cellulose, methyl cellulose, hydroxymethyl cellulose, hydroxyethyl cellulose, polyacrylic acid, polystyrene sulfonic acid, polyacrylamide, polyvinyl acetate, glucose, fructose, galactose, mannose, maltose, sucrose, lactose, glycogen, pectin, alginic acid, glucomannan, chitin, hyaluronic acid, chondroitin, agarose, polyether, dihydric alcohol, and trihydric alcohol.

When the total amount of the organic compound is converted into the amount of carbon, a mixing ratio between the positive electrode active material particle raw material and the organic compound is preferably 0.5 parts by mass or more and 5 parts by mass and more preferably 0.7 parts by mass or more and 3 parts by mass with respect to 100 parts by mass of the positive electrode active material particle raw material. When the mixing ratio of the organic compound in terms of the amount of carbon is the lower limit value or more, the discharge capacity at a high charge-discharge rate is not likely to decrease during battery formation, and it is difficult to realize sufficient charge and discharge rate performance. In a case where the mixing ratio of the organic compound in terms of the amount of carbon is the upper limit value or less, when lithium ions are diffused to the carbonaceous film, steric hindrance is low, and the transfer resistance of lithium ions decreases. As a result, during the formation of a battery, an increase in the internal resistance of the battery can be suppressed, and a decrease in voltage at a high charge-discharge rate can be prevented.

The positive electrode active material particle raw material and the organic compound are dissolved or dispersed in water to prepare a uniform slurry. During the dissolution or the dispersion, it is preferable to add a dispersant. Amethod of dissolving or dispersing the positive electrode active material particle raw material and the organic compound in water is not particularly limited as long as it is a method of dispersing the positive electrode active material particle raw material and dissolving or dispersing the organic compound. For example, it is preferable to use a disperser such as a planetary ball mill, a vibration ball mill, a bead mill, a paint shaker, or an attritor.

When the positive electrode active material particle raw material and the organic compound are dissolved or dispersed in water, it is preferable that, after dispersing the positive electrode active material particle raw material as primary particles, the organic compound is added and stirred to be dissolved. As a result, surfaces of the primary particles of the positive electrode active material can be easily coated with the organic compound. As a result, the surface of the positive electrode active material is uniformly coated with the carbonaceous film derived from the organic compound.

Step C

In the step C, the slurry prepared in the step B is sprayed and dried in a high temperature atmosphere, for example, in air at 70°C or higher and 250°C or lower.

Next, the dry material is calcinated in a non-oxidative atmosphere in a temperature range of 500°C or higher and 1000°C or lower and preferably 600°C or higher and 900°C or lower for 0.1 hours or longer and 40 hours or shorter.

As the non-oxidative atmosphere, an inert atmosphere such as nitrogen ($N_2$) or argon (Ar) is preferable, and when it is desired to further suppress oxidation, a reducing atmosphere including several vol% of reducing gas such as hydrogen ($H_2$) is preferable. In addition, in order to remove an organic component volatilized in the non-oxidative atmosphere during calcination, burnable or combustible gas such as oxygen ($O_2$) may be introduced into the inert atmosphere.

Here, when the calcination temperature is 500°C or higher, the decomposition and reaction of the organic compound in the dry material can be easily made to progress sufficiently, and the carbonization of the organic compound can be easily performed sufficiently. As a result, a decomposition product of the organic compound having a high resistance can be easily prevented from being formed in the obtained granulated body. By adjusting the calcination temperature to be 1000°C or lower, Li is not likely to be evaporated in the positive electrode active material, and the grain growth of the positive electrode active material is suppressed. As a result, the discharge capacity at a high charge-discharge rate can be prevented from decreasing, and sufficient charge and discharge rate performance can be realized.

During this calcination process, by appropriately adjusting conditions for calcinating the dry material, for example, a temperature increase rate, a maximum holding temperature, or a holding time, the particle diameter distribution of the obtained granulated body can be controlled. The average particle diameter of the granulated body is preferably 1 μm or more and 50 μm or less and more preferably 2 μm or more and 30 μm or less. The average particle diameter is measured using a laser diffraction particle diameter distribution analyzer (trade name: SALD-1000, manufactured by Shimadzu Corporation).

Step D

In the step D, at least a part of the granulated body obtained in the step C is crushed with a crusher.

As a device used for crushing the granulated body, any device that can crush a part of the granulated body without completely crushing the granulated body can be used. Examples of the device include a dry ball mill, a wet ball mill, a mixer, an air flow pulverizer such as a jet mill, and an ultrasonic crusher.

In the embodiment, in order to adjust the ratio (A/B) and the ratio (C/D) to be in the desired ranges, it is preferable to use a jet mill for crushing. In addition, it is preferable that the amount of the granulated body put into the jet mill is 10 kg/min or more and 30 kg/min or less, the crushing pressure is 0.3 MPa or more and 0.7 MPa or less, and the air pressure is 0.03 MPa or more and 0.55 MPa or less.

During the crushing process, at least a part of the granulated body is crushed such that a mixture including the granulated body, the partially-crushed granulated body, and the carbon-coated primary particles can be obtained, the partially-crushed granulated body being obtained by crushing a part of the granulated body, and the carbon-coated primary particle being obtained by forming a carbonaceous film on surfaces of primary particles of the positive electrode active material.

The granulated body can be crushed after adding a conductive auxiliary agent to the granulated body.

As the conductive auxiliary agent, at least one selected from the group consisting of carbon black, acetylene black, amorphous carbon, crystalline carbon, and filamentous carbon as a carbon source is preferably used.

The addition amount of the conductive auxiliary agent is not particularly limited as long as it corresponds to the amount of the carbon source that can impart desired conductivity to the positive electrode material. By crushing the granulated body after adding the conductive auxiliary agent to the granulated body, the mixture in which the carbon-coated primary particles, the granulated body, and the partially-crushed granulated body are uniformly mixed can be obtained.

The granulated body can also be crushed after adding a crushing auxiliary agent to the granulated body.

As the crushing auxiliary agent, an organic solvent that functions as a carbon source of the electrode material and is also used as a positive electrode-forming slurry in a subsequent step is preferably used. Examples of the organic solvent include monohydric alcohol, polyhydric alcohol, and ketones. Examples of the monohydric alcohol include methanol, ethanol, and 2-propanol. Examples of the polyhydric alcohol include ethylene glycol. Examples of the ketones include acetone.

By crushing the granulated body after adding the crushing auxiliary agent to the granulated body, the organic solvent functions as a carbon source, and the mixture in which the carbon-coated primary particles, the granulated body, and the partially-crushed granulated body are uniformly mixed can be obtained.

The average particle diameter of the mixture after the crushing step is as described above.

Positive Electrode for Lithium Ion Secondary Batteries

The positive electrode for lithium ion secondary batteries according to the embodiment includes: an electrode current collector; and a positive electrode mixture layer (electrode) that is formed on the electrode current collector, in which the positive electrode mixture layer includes is the positive electrode material for lithium ion secondary batteries according to the embodiment.

That is, in the positive electrode for lithium ion secondary batteries according to the embodiment, the positive electrode mixture layer is formed on one main surface of the electrode current collector using the positive electrode material for lithium ion secondary batteries according to the embodiment.

A method of producing the positive electrode for lithium ion secondary batteries according to the embodiment is not particularly limited as long as the positive electrode mixture layer can be formed on one main surface of the electrode current collector using the positive electrode material for lithium ion secondary batteries according to the embodiment. Examples of the method of producing the positive electrode for lithium ion secondary batteries according to the embodiment include the following method.

First, the positive electrode material for lithium ion secondary batteries according to the embodiment, a binder, a conductive auxiliary agent, and a solvent are mixed with each other to prepare a positive electrode material paste for lithium ion secondary batteries.

Binder

As the binder, that is, as a binder resin, for example, a polytetrafluoroethylene (PTFE) resin, a polyvinylidene fluoride (PVdF) resin, or a fluororubber is suitably used.

When the total mass of the positive electrode material for lithium ion secondary batteries according to the embodiment, the binder, and the conductive auxiliary agent is represented by 100% by mass, the content rate of the binder in the positive electrode material paste for lithium ion secondary batteries is preferably 1% by mass or more and 10% by mass or less and more preferably 2% by mass or more and 6% by mass or less.

Conductive Auxiliary Agent

The conductive auxiliary agent is not particularly limited, and for example, at least one selected from the group consisting of acetylene black, Ketjen black, Furnace black, and filamentous carbon such as vapor-grown carbon fiber (VGCF) or carbon nanotube is used.

When the total mass of the positive electrode material for lithium ion secondary batteries according to the embodiment, the binder, and the conductive auxiliary agent is represented by 100% by mass, the content rate of the conductive auxiliary agent in the positive electrode material paste for lithium ion secondary batteries is preferably 1% by mass or more and 15% by mass or less and more preferably 3% by mass or more and 10% by mass or less.

Solvent

The solvent may be appropriately added to the positive electrode material paste for lithium ion secondary batteries including the positive electrode material for lithium ion secondary batteries according to the embodiment so as to easily coat a coating object such as the electrode current collector with the paste.

A solvent used in a coating material for forming an electrode or a paste for forming an electrode may be appropriately selected depending on the characteristics of the binder resin.

Examples of the solvent include water; alcohols such as methanol, ethanol, 1-propanol, 2-propanol (isopropyl alcohol: IPA), butanol, pentanol, hexanol, octanol, and diacetone alcohol; esters such as ethyl acetate, butyl acetate, ethyl lactate, propylene glycol monomethyl ether acetate, propylene glycol monoethyl ether acetate, and γ-butyrolactone; ethers such as diethyl ether, ethylene glycol monomethyl ether (methyl cellosolve), ethylene glycol monoethyl ether (ethyl cellosolve), ethylene glycol monobutyl ether (butyl cellosolve), diethylene glycol monomethyl ether, and diethylene glycol monoethyl ether; ketones such as acetone, methyl ethyl ketone (MEK), methyl isobutylketone (MIBK), acetyl acetone, and cyclohexanone; amides such as dimethylformamide, N,N-dimethylacetoacetamide, and N-methylpyrrolidone; and glycols such as ethylene glycol, diethylene glycol, and propylene glycol. Among these solvents, one kind may be used alone, or a mixture of two or more kinds may be used.

When the total mass of the positive electrode material for lithium ion secondary batteries according to the embodiment, the binder, and the solvent is represented by 100 parts by mass, the content rate of the solvent in the positive electrode material paste for lithium ion secondary batteries is preferably 60 parts by mass or more and 400 parts by mass or less and more preferably 80 parts by mass or more and 300 parts by mass or less.

By controlling the content of the solvent to be in the above-described range, the positive electrode material paste for lithium ion secondary batteries having good electrode formability and good battery characteristics can be obtained.

A method of mixing the positive electrode material for lithium ion secondary batteries according to the embodiment, the binder, the conductive auxiliary agent, and the solvent with each other is not particularly limited as long as it is a method capable of uniformly mixing the components. For example, a method of using a kneader such as a ball mill, a sand mill, a planetary mixer, a paint shaker, or a homogenizer can be used.

Next, one main surface of the electrode current collector is coated with the positive electrode material paste for lithium ion secondary batteries to form a film thereon, and this coating film is dried and compressed. As a result, the positive electrode for lithium ion secondary batteries in which the positive electrode mixture layer is formed on the main surface of the electrode current collector can be obtained.

The positive electrode for lithium ion secondary batteries according to the embodiment includes the positive electrode material for lithium ion secondary batteries according to the embodiment. Therefore, a sufficient electrode density for improving energy density or high output characteristics can be realized.

Lithium Ion Secondary Battery

The lithium ion secondary battery according to the embodiment includes a positive electrode, a negative electrode, and a non-aqueous electrolyte, in which the positive electrode for lithium ion secondary batteries according to the embodiment is provided as the positive electrode.

In the lithium ion secondary battery according to the embodiment, the negative electrode, the non-aqueous electrolyte, the separator, and the like are not particularly limited.

The negative electrode can be formed of, for example, a negative electrode material such as metal Li, a carbon material, a Li alloy, or $Li_4Ti_5O_{12}$.

In addition, a solid electrolyte may be used instead of the non-aqueous electrolyte and the separator.

The non-aqueous electrolyte can be prepared by mixing ethylene carbonate (EC) and ethyl methyl carbonate (EMC) with each other at a volume ratio of 1:1 to obtain a mixed solvent, and dissolving lithium hexafluorophosphate ($LiPF_6$) in the obtained mixed solvent such that the concentration thereof is, for example, 1 $mol/dm^3$.

As the separator, for example, porous propylene can be used.

The lithium ion secondary battery according to the embodiment includes the positive electrode for lithium ion secondary batteries according to the embodiment. Therefore, energy density or high output characteristics can be improved.

Examples

Hereinafter, the present invention will be described in detail using Examples and Comparative Examples, but is not limited to the following examples.

Production Example: Production of Positive Electrode Active Material ($LiFePO_4$)

$LiFePO_4$ was produced as follows.

First, synthesis of $LiFePO_4$ will be described.

$Li_3PO_4$ was used as a Li source, $NH_4H_2PO_4$ was used a P source, a $FeSO_4 \cdot 7H_2O$ was used as a Fe source, and the Li source, the P source, and the Fe source were mixed with each other in pure water such that a molar ratio Li:Fe:P between Li, Fe, and P was 3:1:1. As a result, 200 mL of a uniform slurry mixture was prepared.

Next, this mixture was put into a pressure-resistant airtight container having a volume of 500 mL, and hydrothermal synthesis was performed at 170°C for 12 hours.

After the reaction, the atmosphere in the pressure-resistant airtight container was cooled to room temperature (25°C) to obtain a cake-like precipitate of a reaction product.

This precipitate was sufficiently cleaned with distilled water multiple times, and the water content was maintained at 30% to prevent drying. As a result, a cake-like material was obtained.

A small amount of the cake-like material was dried in a vacuum at 70°C for 2 hours, and the obtained powder was measured by X-ray diffraction. As a result, it was verified that single-phase $LiFePO_4$ was formed.

Example 1

20 g of the obtained $LiFePO_4$ (positive electrode active material) obtained in the production example and 0.73 g of polyvinyl alcohol as a carbon source were mixed with each other in water such that the total amount was 100 g. The mixture was dispersed using a bead mill together with 150 g of zirconia beads having a diameter of 0.1 mm to obtain a slurry (mixture) having a dispersed particle diameter (D50) of 100 nm.

Next, the obtained slurry was dried and granulated using a spray dryer such that the drying outlet temperature was 60 °C. As a result, a granulated body was obtained.

Next, using a tube furnace, the granulated body was heated to 300°C at a temperature increase rate of 5 °C/min, was left to stand for 30 minutes, was heated to 700°C at a temperature increase rate of 15 °C/min, and was heated for 30 minutes. As a result, a granulated body was obtained by agglomeration of apluralityof carbon-coated primary particles, the carbon-coated primary particle being obtained by forming a carbonaceous film on surfaces of primary particles of a positive electrode active material.

Next, the obtained granulated body was crushed with a jet mill and was classified to remove coarse particles. Next, the second crushing process was performed. Next, a positive electrode material as a mixture including the granulated body, the partially-crushed granulated body, and the carbon-coated primary particles was obtained, the partially-crushed granulated body being obtained by crushing a part of the granulated body, and the carbon-coated primary particle being obtained by forming a carbonaceous film on surfaces of primary particles of the positive electrode active material. The thickness of the carbonaceous film was in a range of 0.5 nm or more and 10 nm or less.

Example 2

A positive electrode material as a mixture including the granulated body, the partially-crushed granulated body, and the carbon-coated primary particles was obtained using the same method as that of Example 1 except that the second crushing process was not performed, the partially-crushed granulated body being obtained by crushing a part of the granulated body, and the carbon-coated primary particle being obtained by forming a carbonaceous film on surfaces of primary particles of the positive electrode active material. The thickness of the carbonaceous film was in a range of 0.5 nm or more and 10 nm or less.

Comparative Example 1

A positive electrode material as a mixture including the granulated body, the partially-crushed granulated body, and the carbon-coated primary particles was obtained using the same method as that of Example 1 except that the first and second crushing processes and the classification process were not performed, the partially-crushed granulated body being obtained by crushing a part of the granulated body, and the carbon-coated primary particle being obtained by forming a carbonaceous film on surfaces of primary particles of the positive electrode active material.

Comparative Example 2

A positive electrode material as a mixture including the granulated body, the partially-crushed granulated body, and the carbon-coated primary particles was obtained using the same method as that of Example 1 except that the classification process and the second crushing processes were not performed, the partially-crushed granulated body being obtained by crushing a part of the granulated body, and the carbon-coated primary particle being obtained by forming a carbonaceous film on surfaces of primary particles of the positive electrode active material.

Comparative Example 3

A positive electrode material as a mixture including the granulated body, the partially-crushed granulated body, and the carbon-coated primary particles was obtained using the same method as that of Comparative Example 2 except that the amount of polyvinyl alcohol put into the slurry was changed to 0.36 g and 0.37 g of polyvinyl alcohol was put again after granulation and was kneaded, the partially-crushed granulated body being obtained by crushing a part of the granulated body, and the carbon-coated primary particle being obtained by forming a carbonaceous film on surfaces of primary particles of the positive electrode active material.

Preparation of Positive Electrode for Lithium Ion Secondary Batteries

90% by mass of the positive electrode material obtained in each of Examples 1 and 2 and Comparative Examples 1 to 3, 5% by mass of acetylene black (AB) as a conductive auxiliary agent, and 5% by mass of polyvinylidene fluoride (PVdF) as a binder were added to N-methyl-2-pyrrolidinone (NMP) and were mixed with each other to prepare a positive electrode material paste.

Next, this positive electrode material paste was applied to both surfaces of a current collector formed of aluminum foil having a thickness of 30 $\mu$m to form a coating film, and this coating film was dried to form a positive electrode mixture layer on both the surfaces of the aluminum foil. Next, the positive electrode mixture layer was pressed using a roll press under a condition of press spacing: 30 $\mu$m such that a predetermined density was obtained. As a result, a positive electrode sheet was obtained.

Positive Electrode Density Calculation

The positive electrode sheet was cut into a size of 3 cm × 3 cm, and the mass of the positive electrode sheet, the thickness of the positive electrode sheet, the mass of the current collector having the same size, and the thickness of the current collector were measured. Using these calculation results, the mass of the positive electrode mixture layer was calculated from the following Expression (2), and the thickness of the positive electrode mixture layer was calculated from the following Expression (3).

$$\text{(Mass of Positive Electrode Sheet)} - \text{(Mass of Current Collector)} = \text{(Mass of Positive Electrode Mixture Layer)} \quad \ldots \quad (2)$$

$$\text{(Thickness of Positive Electrode Sheet)} - \text{(Thickness of Current Collector)} = \text{(Thickness of Positive Electrode Mixture Layer)} \quad \ldots \quad (3)$$

Using the obtained mass of the positive electrode mixture layer and the obtained thickness of the positive electrode mixture layer, the density of the positive electrode mixture layer (positive electrode density: $g/cm^3$) was calculated from the following Expression (4). The results are shown in Table 2.

$$\text{(Mass of Positive Electrode Mixture Layer)} / \text{(Area of Positive Electrode Mixture Layer} \times \text{Thickness of Positive Electrode Mixture Layer)} = \text{(Density of Positive Electrode Mixture Layer)} \quad \ldots \quad (4)$$

Oil Absorption Amount using N-Methyl-2-Pyrrolidone (NMP) (NMP Oil Absorption Amount)

The oil absorption amount with respect to powder (positive electrode material) per 100 g was measured with a method according to JIS K5101-13-1 (refined linseed oil method) by using linseed oil instead of N-methyl-2-pyrrolidone (NMP). The results are shown in Table 1.

Powder Pressure Test

3 g of the positive electrode material was put into a cylindrical container having a diameter of 2 cm, and a pressure was applied from above at a rate of 0.01 mm for 10 seconds to perform a powder pressure test.
During the powder pressure test, the thickness of the powder and the applied pressure were detected using a micrometer and a pressure sensor, respectively.
The density of the powder (positive electrode material) was calculated from (Mass of Powder) / (Thickness of Powder × Area of Powder).
At the start of application of the pressure, even when the powder was pressed, the pressure did not increase until a stress transmission line was formed. After pressing, the stress transmission line was formed, and the density of the powder measured immediately before the pressure increased was detected as an initial powder density. The density of the powder measured when the detected pressure reached 4.5 MPa after pressing was detected as a powder density measured at a pressure of 4.5 MPa. The results are shown in Table 1.

Oil Absorption Amount per Powder Unit Mass/Void Volume per Unit Mass

As the oil absorption amount per unit mass of the positive electrode material (powder), the NMP oil absorption amount was obtained.

In addition, in the powder pressure test, the void volume per unit mass of the positive electrode material was calculated from the following Expression (5). The results are shown in Table 1.

$$
\begin{aligned}
&\text{(Volume per Unit Mass of Positive Electrode Material} \\
&\text{calculated from Initial Powder Density)} - \text{(Volume per Unit Mass} \\
&\text{of Positive Electrode Material calculated from True Density of} \\
&\text{Positive Electrode Material)} = \text{(Void Volume per Unit Mass of} \\
&\text{Positive Electrode Material)} \ \ldots \ (5)
\end{aligned}
$$

Measurement of Particle Diameter Distribution of Powder (D10, D50, D90)

The particle diameter distribution of the powder (positive electrode material) was measured using a laser diffraction particle diameter distribution analyzer (trade name: LA-950 V2, manufactured by Horiba Ltd.). In the detected cumulative particle diameter distribution of the mixture, a particle diameter corresponding to a cumulative percentage of 10% was obtained as D10, a particle diameter corresponding to a cumulative percentage of 50% was obtained as D50, and a particle diameter corresponding to a cumulative percentage of 90% was obtained as D90. The results are shown in Table 2.

[Table 1]

| | Oil Absorption Amount (A) [mL/100 g] | Void Volume (B) [cm³/g] | (A) / (B) | Powder Density (C) at Pressure of 4.5 MPa [cm³/g] | Initial Powder Density (D) [cm³/g] | (C) / (D) |
|---|---|---|---|---|---|---|
| Example 1 | 26 | 0.51 | 0.51 | 1. 98 | 1.26 | 1.57 |
| Example 2 | 36 | 0.52 | 0.70 | 1.80 | 1.28 | 1.40 |
| Comparative Example 1 | 68 | 0.62 | 1.10 | 1.58 | 1.11 | 1.43 |
| Comparative Example 2 | 65 | 0.61 | 1.06 | 1.57 | 1.11 | 1.41 |
| Comparative Example 3 | 55 | 0.61 | 0.90 | 1.46 | 1.20 | 1.22 |

[Table 2]

| | Average Primary Particle Diameter [nm] | Particle Diameter Distribution of Powder | | | Positive Electrode Density [g/cm³] |
|---|---|---|---|---|---|
| | | D10 [μm] | D50 [μm] | D90 [μm] | |
| Example 1 | 129 | 0.5 | 0.8 | 1.5 | 2.50 |
| Example 2 | 143 | 0.3 | 1.0 | 4.2 | 2.48 |
| Comparative Example 1 | 128 | 1.3 | 12.0 | 25.0 | 2.22 |
| Comparative Example 2 | 117 | 3.1 | 8.2 | 22.0 | 2.21 |

(continued)

|  | Average Primary Particle Diameter [nm] | Particle Diameter Distribution of Powder | | | Positive Electrode Density [g/cm$^3$] |
| --- | --- | --- | --- | --- | --- |
|  |  | D10 [$\mu$m] | D50 [$\mu$m] | D90 [$\mu$m] |  |
| Comparative Example 3 | 124 | 1.0 | 7.0 | 18.0 | 2.28 |

From the results of Tables 1 and 2, during positive electrode preparation, a high-density positive electrode can be prepared, and characteristics per volume can be improved.

With the positive electrode material for lithium ion secondary batteries according to the present invention, the energy density or high output characteristics of a lithium ion secondary battery can be improved. Thus, the positive electrode material for lithium ion secondary batteries is applicable to the next-generation secondary battery in which high voltage, high energy density, high load characteristics, and high-speed charge and discharge characteristics are expected. In the case of the next-generation secondary battery, the effects are significant.

**Claims**

1. A positive electrode material for lithium ion secondary batteries, wherein

   a ratio (A/B) of an oil absorption amount (A) of powder per unit mass of the material, which is measured using N-methyl-2-pyrrolidone, to a void volume (B) of powder per unit mass of the material is 0.30 or more and 0.85 or less, and
   a ratio (C/D) of a powder density (C) of the material, which is measured in a powder pressure test at a pressure of 4.5 MPa, to an initial powder density (D) of the material is 1.3 or more and 1.7 or less.

2. The positive electrode material for lithium ion secondary batteries according to claim 1,
   wherein the oil absorption amount (A) is 50 mL or less.

3. The positive electrode material for lithium ion secondary batteries according to claim 1, wherein the material consists of a mixture which includes

   carbon-coated primary particles in which a carbonaceous film having a thickness of 0.5 nm or more and 10 nm or less has been formed on surfaces of primary particles of a positive electrode active material,
   a granulated body in which a plurality of the carbon-coated primary particles have been agglomerated, and
   a partially-crushed granulated body, in which a part of the granulated body has been crushed, and
   a particle diameter (D90) of the mixture, which corresponds to a cumulative percentage of 90% in a cumulative particle diameter distribution of the mixture, is 5 $\mu$m or less.

4. A positive electrode for lithium ion secondary batteries, comprising:

   an electrode current collector; and
   a positive electrode mixture layer which is formed on the electrode current collector,
   wherein the positive electrode mixture layer includes the positive electrode material for lithium ion secondary batteries according to claim 1.

5. A lithium ion secondary battery comprising:

   a positive electrode;
   a negative electrode; and
   a non-aqueous electrolyte,
   wherein the positive electrode for lithium ion secondary batteries according to claim 4 is provided as the positive electrode.

6. The positive electrode material for lithium ion secondary batteries according to claim 3,

wherein the positive electrode active material consists of a compound represented by Formula $Li_xA_yD_zPO_4$ (where A represents at least one selected from the group consisting of Co, Mn, Ni, Fe, Cu, and Cr, D represents at least one selected from the group consisting of Mg, Ca, Sr, Ba, Ti, Zn, B, Al, Ga, In, Si, Ge, Sc, and Y, $0.9 < x < 1.1$, $0 < y \leq 1$, $0 \leq z < 1$, and $0.9 < y + z < 1.1$).

7. The positive electrode material for lithium ion secondary batteries according to claim 1,
wherein the carbonaceous film consists of a pyrolytic carbonaceous film which is obtained by carbonizing an organic compound in which purity of carbon of the compound is 40.00% or higher and 60.00% or lower.

8. The positive electrode material for lithium ion secondary batteries according to claim 3,
wherein an average particle diameter of the carbon-coated primary particles is 50 nm or more and 900 nm or less.

9. The positive electrode material for lithium ion secondary batteries according to claim 1,
wherein a specific surface area of the positive electrode material is 3 $m^2$/g or more and 20 $m^2$/g or less.

10. The positive electrode material for lithium ion secondary batteries according to claim 1,
wherein the particle diameter (D90) of the mixture is 0.5 $\mu$m or more.

11. The positive electrode material for lithium ion secondary batteries according to claim 1,
wherein a particle diameter (D10) of the mixture, which corresponds to a cumulative percentage of 10% in a cumulative particle diameter distribution of the mixture, is 100 nm or more and 1000 nm or less.

## FIG. 1

## FIG. 2

Europäisches
Patentamt

European
Patent Office

Office européen
des brevets

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 534 439 A1 (SUMITOMO OSAKA CEMENT CO LTD [JP]) 4 September 2019 (2019-09-04) * example 1; table 1 * ----- | 1-10 | INV. C01G49/00 H01M4/1397 H01M4/36 H01M4/58 H01M4/62 |
| X | JIN CHONG ET AL: "Towards the understanding of coatings on rate performance of LiFePO", JOURNAL OF POWER SOURCES, ELSEVIER SA, CH, vol. 200, 19 October 2011 (2011-10-19), pages 67-76, XP028125899, ISSN: 0378-7753, DOI: 10.1016/J.JPOWSOUR.2011.10.073 [retrieved on 2011-10-25] * page 69, left-hand column; table 1 * ----- | 1,3-7, 9-11 | ADD. H01M4/02 H01M10/0525 |
| X | DING RUQIAN ET AL: "Effect of spray drying technological conditions on the performance of LiFePO/C cathode materials with high energy density", IONICS, KIEL, DE, vol. 25, no. 12, 24 July 2019 (2019-07-24), pages 5633-5642, XP036943754, ISSN: 0947-7047, DOI: 10.1007/S11581-019-03162-7 [retrieved on 2019-07-24] * page 5640, left-hand column; figure 6f; table 1 * ----- | 1,3-7,9, 10 | |

TECHNICAL FIELDS
SEARCHED (IPC)

C01G
H01M

The present search report has been drawn up for all claims

| Place of search | Date of completion of the search | Examiner |
|---|---|---|
| Munich | 26 August 2021 | Meini, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 16 4159

This annex lists the patent family members relating to the patent documents cited in the above-mentioned European search report.
The members are as contained in the European Patent Office EDP file on
The European Patent Office is in no way liable for these particulars which are merely given for the purpose of information.

26-08-2021

| Patent document cited in search report | | Publication date | Patent family member(s) | | Publication date |
|---|---|---|---|---|---|
| EP 3534439 | A1 | 04-09-2019 | CN | 109768228 A | 17-05-2019 |
| | | | EP | 3534439 A1 | 04-09-2019 |
| | | | JP | 6471821 B1 | 20-02-2019 |
| | | | JP | 2019149355 A | 05-09-2019 |
| | | | KR | 20190103922 A | 05-09-2019 |
| | | | US | 2019267623 A1 | 29-08-2019 |

EPO FORM P0459

For more details about this annex : see Official Journal of the European Patent Office, No. 12/82

## REFERENCES CITED IN THE DESCRIPTION

**Patent documents cited in the description**

- JP 2020165088 A
- JP 4584351 B
- JP 6501014 B
- JP 6231966 B